# EUROPÄISCHE PATENTSCHRIFT

(11) **EP 1 141 083 B1**
(45) Veröffentlichungstag und Bekanntmachung des Hinweises auf die Patenterteilung: **18.08.2004**
(21) Anmeldenummer: 99968792.4
(22) Anmeldetag: 10.12.1999
(51) Int. Cl.: C08G 65/22, C08G 83/00

(54) **VERFAHREN ZUR HERSTELLUNG VON HOCHVERZWEIGTEN POLYOLEN AUF DER BASIS VON GLYCIDOL**
METHOD FOR PRODUCING HIGHLY BRANCHED GLYCIDOL-BASED POLYOLS
PROCEDE PERMETTANT DE PRODUIRE DES POLYOLS HAUTEMENT RAMIFIES A PARTIR DE GLYCIDOL

(30) Priorität: 22.12.1998 DE 19859300; 04.10.1999 DE 19947631
(43) Veröffentlichungstag der Anmeldung: 10.10.2001
(73) Patentinhaber: Bayer MaterialScience AG, 51368 Leverkusen (DE)
(72) Erfinder: SUNDER, Alexander, D-79098 Freiburg (DE); MÜLHAUPT, Rolf, D-79117 Freiburg (DE)
(86) Internationale Anmeldenummer: PCT/EP1999/009773
(87) Internationale Veröffentlichungsnummer: WO 2000/037532

(56) Entgegenhaltungen:
- EP-A- 0 116 978
- DE-A- 3 233 251
- DWORAK A: "CATIONIC POLYMERISATION OF GLYCIDOL" INTERNATIONAL POLYMER SCIENCE AND TECHNOLOGY,GB,RAPRA TECHNOLOGIES, SHROPSHIRE, Bd. 22, Nr. 11, 1. November 1995 (1995-11-01), Seiten T-91-T-95, XP000583789 ISSN: 0307-174X
- PATENT ABSTRACTS OF JAPAN vol. 1998, no. 01, 30. Januar 1998 (1998-01-30) & JP 09 235246 A (LION CORP), 9. September 1997 (1997-09-09)

## Beschreibung

Die Erfindung betrifft ein Verfahren zur Herstellung von hochverzweigten Polyolen durch Polymerisation von Glycidol in Gegenwart einer wasserstoffaktiven Starterverbindung unter basischer Katalyse.

Verzweigte Polyole auf Glycidolbasis werden üblicherweise hergestellt, indem Glycidol mit einer hydroxylgruppenhaltigen Verbindung, z.B. Glycerin, in Gegenwart anorganischer (JP-A 61-43627) oder organischer Säuren (JP-A 58-198429) als Katalysatoren zur Reaktion gebracht wird. Die so erhaltenen Polymere besitzen gewöhnlich einen niedrigen Polymerisationsgrad. Die Polymerisation von Glycidol zu höhermolekularen Produkten, die eine enge Molmassenverteilung und vollständigen Initiatoreinbau besitzen, lässt sich aufgrund der konkurrierenden Cyclisierungsreaktionen durch kationische Katalyse nicht realisieren (Macromolecules, 27 (1994) 320; Macromol. Chem. Phys. 196 (1995) 1963). Bisherige Verfahren mit basischer Katalyse (EP-A 116 978; J. Polym. Sci., 23(4) (1985) 915), führen ebenfalls nicht zu farblosen und nebenproduktfreien Produkten mit enger Molmassenverteilung und vollständigem Initiatoreinbau. Als Nebenreaktion ist dabei insbesondere die Cyclenbildung infolge der Autopolymerisation von Glycidol von Bedeutung.

Es war daher Aufgabe der vorliegenden Erfindung, ein Verfahren zur Herstellung hochverzweigter Polyole auf der Basis von Glycidol zu finden, welches die oben geschilderten Probleme vermeidet.

Überraschenderweise wurde jetzt gefunden, dass es möglich ist, farblose, engverteilte und definiert aufgebaute hochverzweigte Polyole auf Glycidolbasis herzustellen, wenn einer wasserstoffaktiven Starterverbindung unter basischer Katalyse eine Lösung, die Glycidol in verdünnter Form enthält, zugegeben wird, wobei das zur Verdünnung eingesetzte Lösungsmittel kontinuierlich abdestilliert wird. Definierter Aufbau bedeutet in diesem Zusammenhang, dass jedes Molekül den Initiator (wasserstoffaktive Starterverbindung) als Kemeinheit besitzt und der Polymerisationsgrad über das Monomer/Initiator-Verhältnis gesteuert werden kann.

Ein Gegenstand der Erfindung ist ein Verfahren zur Herstellung von Polyolen wie in Anspruch 1 definiert, welches dadurch gekennzeichnet ist, dass einer wasserstoffaktiven Starterverbindung unter basischer Katalyse eine Lösung, die Glycidol in verdünnter Form enthält, zugegeben wird, wobei das zur Monomerverdünnung eingesetzte Lösungsmittel kontinuierlich abdestilliert wird.

Durch die bei Basenkatalyse bevorzugte Öffnung des Epoxidrings am unsubstituierten Ende wird zunächst ein sekundäres Alkoholat erzeugt, welches sich aber infolge der basischen Katalyse im schnellen Austausch mit dem primären Alkoholat befindet. Das schnelle Protonenaustauschgleichgewicht sorgt dafür, dass alle im System vorhandenen Hydroxygruppen polymerisationsaktiv sind und es zur Ausbildung von Verzweigungen kommt.

Als wasserstoffaktive Starterverbindungen werden Verbindungen mit Molekulargewichten von 18 bis 4,000 und 1 bis 20 Hydroxyl-, Thiol- und/oder Aminogruppen verwendet. Beispielhaft seien genannt: Methanol, Ethanol, Butanol, Phenol, Ethylenglykol, Diethylenglykol, Triethylenglykol, Polyethylenglykol, 1,2-Propylenglykol, Dipropylenglykol, Polypropylenglykol, 1,4-Butandiol, Hexamethylenglykol, Bisphenol A, Trimethylolpropan, Glyzerin, Pentaerythrit, Sorbit, Rohrzucker, abgebaute Stärke, Wasser, Methylamin, Ethylamin, Propylamin, Butylamin, Stearylamin, Anilin, Benzylamin, o- und p-Toluidin, α,β-Naphtylamin, Ammoniak, Ethylendiamin, Propylendiamin, 1,4-Butylendiamin, 1,2-, 1,3-, 1,4-, 1,5- oder 1,6-Hexamethylendiamin, wie o-, m- und p-Phenylendiamin, 2,4-, 2,6-Toluylendiamin, 2,2'-, 2,4- und 4,4'-Diaminodiphenylmethan und Diethylendiamin, sowie Verbindungen, die funktionalisierbare Startergruppen beinhalten wie z.B. Allylglycerin, 10-Undecenylamin, Dibenzylamin, Allylalkohol, 10-Undecenol. Die Starterverbindung wird zunächst durch ein geeignetes Reagenz partiell deprotoniert, z.B. durch Alkali- oder Erdalkalimetalle, deren Hydride, Alkoxide, Hydroxide oder Alkyle. Bevorzugt werden Alkali- oder Erdalkalimetallhydroxide oder ―alkoxide eingesetzt, wie z.B. Kaliumhydroxid oder -methoxid. Dabei gegebenenfalls entstehende reaktive, flüchtige Reaktionsprodukte (z.B. Wasser, Alkohol) werden entfernt (z.B. durch Destillation). Deprotonierungsgrade liegen üblicherweise bei 0,1% bis 90% und vorzugsweise bei 5% bis 20%. Um Durchmischungsprobleme im Lauf der Reaktion zu vermeiden, wird das so bereitete basische Initiatorsystem, vorzugsweise unter Inertgas (z.B. N₂, Ar), in einem inerten Lösungsmittel I (0,1 - 90 Gew.-%, bezogen auf die Menge des Endprodukts) mit einer Siedetemperatur mindestens 5°C oberhalb der Reaktionstemperatur gelöst bzw. dispergiert. Lösungsmittel I kann ein aliphatischer, cycloaliphatischer oder aromatischer Kohlenwasserstoff (z.B. Decalin, Toluol, Xylol) oder ein Ether (z.B. Glyme, Diglyme, Triglyme), vorzugsweise Diglyme, sowie Gemische aus diesen sein. Das Monomer wird in einer Lösung zugegeben, die üblicherweise 80 bis 0,1 Gew.-% und vorzugsweise 50 bis 1 Gew.-% Glycidol in einem inerten Lösungsmittel II enthält. Lösungsmittel II kann ein aliphatischer, cycloaliphatischer oder aromatischer Kohlenwasserstoff (z.B. Hexan, Cyclohexan, Benzol) oder ein Ether (z.B. Diethylether, THF), vorzugsweise THF, oder ein Gemisch aus diesen sein, wobei die Siedetemperatur mindestens 1°C unterhalb der Reaktionstemperatur liegt. Das Lösungsmittel II kann noch weitere Zusatzstoffe wie Stabilisatoren und bis 10 Gew.-%, bezogen auf das Lösungsmittel, weitere Comonomere, wie z.B. Propylenoxid, Ethylenoxid, Butylenoxid, Vinyloxiran, Allylglycidylether, Isopropylglycidylether, Phenylglycidylether enthalten. Lösungsmittel II muss ein Lösungsmittel für Glycidol sein, aber nicht notwendigerweise für das Polyol. Die Monomerlösung wird, vorzugsweise unter Inertgas (z.B. N₂, Ar), langsam zur Mischung aus Initiator und Lösungsmittel I zudosiert. Die Dosiergeschwindigkeit wird so gewählt, dass bei den gegebenen Reaktionsbedingungen von Reaktionstemperatur, Glycidolkonzentration, Hydroxyl- und Katalysatorkonzentration eine gute Temperaturkontrolle gewährleistet wird. Während des Reaktionsverlaufs wird Lösungsmittel II kontinuierlich aus der Reaktionsmischung abdestilliert. Die Reaktionstemperaturen betragen dabei üblicherweise 40°C bis 180°C, vorzugsweise 80°C bis 140°C. Die Reaktion wird vorzugsweise unter Normaldruck oder reduziertem Druck durchgeführt. Im Laufe der Reaktion kann es je nach Wahl der Lösungsmittel I und II zu einer Heterogenisierung der Reaktionsmischung kommen, was die Reaktionsführung aber nicht beeinflusst, solange keine Fällung eintritt. Zur Aufarbeitung des alkalischen Polymerisates können grundsätzlich alle Techniken eingesetzt werden, wie sie aus der Aufarbeitung von Polyetherpolyolen für Polyurethananwendungen bekannt sind (H. R. Friedel in Gum, W. F.; Riese, W. (Hrsg.): "Reaction Polymers", Hanser Verlag, München 1992, S. 79). Die Aufarbeitung des Polyols erfolgt vorzugsweise durch Neutralisation. Dazu kann das alkalische Polymerisat zunächst in einem geeigneten Lösungsmittel (z.B. Methanol) gelöst werden. Bevorzugt erfolgt die Neutralisation durch Ansäuern mit verdünnter Mineralsäure (z.B. Schwefelsäure) mit anschließender Filtration oder Behandlung mit Adsorbens (z.B. Magnesiumsilikat), besonders bevorzugt durch Filtration über sauren Ionentauscher. Es kann sich eine weitere Aufreinigung durch Fällung (z.B. aus Methanol in Aceton) anschliessen. Abschließend wird das Produkt im Vakuum bei Temperaturen von 20 bis 200°C von Lösungsmittelresten befreit.

Die Polymerisation kann in einem Reaktorsystem durchgeführt werden, welches aus drei wesentlichen Komponenten besteht: einem beheizbaren Reaktorgefäß mit mechanischer Rühreinheit, einer Dosiereinheit und einem System zur Lösungsmittelabscheidung.

Die so dargestellten Polyole, die Gegenstand des Verfahrens der Anmeldung sind, besitzen Polymerisationsgrade (bezogen auf ein aktives Wasserstoffatom des Initiators) von 1 bis 300, vorzugsweise von 5 bis 80. Die Molmasse der erfindungsgemäßen Polyole kann dem anionischen Verfahren entsprechend durch das Monomer/ Initiator-Verhältnis gesteuert werden. Die Bestimmung der Molmasse kann z.B. durch Dampfdruckosmose erfolgen. Die Polydispersitäten sind kleiner als 1,7 und vorzugsweise kleiner als 1,5. Sie werden über eine z.B. mit Polypropylenglykol-Standards geeichte GPC bestimmt. Die Polyole enthalten den verwendeten Initiator als Kerneinheit, was vorzugsweise über MALDI-TOF-Massenspektrometrie nachgewiesen werden kann. Die Produkte sind vorzugsweise farblos, können aber auch schwach gelblich gefärbt sein. Der Anteil an verzweigten Einheiten in den hochverzweigten Polyolen bezogen auf die Gesamtheit aller Monomerbaueinheiten läßt sich aus den Intensitäten der Signale in den ¹³C-NMR-Spektren bestimmen. Der dreifach substituierte Kohlenstoff der verzweigten Einheiten zeigt eine Resonanz zwischen 79,5 ppm und 80,5 ppm (gemessen in d₄-Methanol, Inverse-Gated-Technik). Der Anteil der verzweigten Einheiten ist gleich dem dreifachen Wert dieses Integralwerts im Verhältnis zur Summe der Integrale aller Signale aller Einheiten (verzweigte, lineare und terminale). Die nach dem beschriebenen Verfahren hergestellten Polyole besitzen 10 bis 33 mol%, bevorzugt 20 bis 33 mol%, verzweigte Einheiten. Im Vergleich dazu besitzt ein perfektes Dendrimer 50 mol% verzweigte und 50 mol% terminale Einheiten. Ein lineares Polymer weist dagegen keine verzweigten Einheiten auf, sondern nur lineare Einheiten und je nach Initiator ein bis zwei terminale Einheiten. Mit 20 bis 33 mol% verzweigten Einheiten können die beschriebenen Polyole somit als hochverzweigt bezeichnet werden (siehe z.B. Acta Polymer., 48 (1997) 30; Acta Polymer., 48 (1997) 298).

Die so hergestellten hochverzweigten Polyole sind vielseitige hochfunktionelle polymere Zwischenstufen. Die große Variationsbreite an potentiellen Initiatormolekülen und die gezielte Steuerung des Polymerisationsgrades (und damit des Funktionalisierungsgrades) eröffnen vielfältige Anwendungsmöglichkeiten, so z.B. die Verwendung als Vernetzer und Additiv in Polyurethanformulierungen, biokompatiblen Polymeren, Lacken, Klebstoffen und Polymerblends, als Trägermaterialien für Katalysatoren und Wirkstoffe in Medizin, Biochemie und Synthese.

Daneben können durch gezielte Umsetzungen der funktionellen Gruppen Derivatisierungen vorgenommen werden.

Die Hydroxylgruppen können durch an sich bekannte Reaktionen z.B. verestert, verethert, aminiert, alkyliert, urethanisiert, halogeniert, sulfoniert, sulfatiert und oxidiert werden. Die terminalen 1,2-Diolgruppen können z.B. acetalisiert bzw. ketalisiert oder einer Diolspaltung unterworfen werden.

Doppelbindungen, die z.B. über die Starterverbindung in das Polyol eingeführt werden, lassen sich ebenfalls in geeigneter Form derivatisieren, z.B. durch Hydroformulierung oder radikalische oder elektrophile Addition.

Die auf diese Weise derivatisierten Polyole eröffnen wiederum eine Vielzahl von Anwendungsmöglichkeiten wie z.B. die Verwendung als Vernetzer und Additive in Polyurethanformulierungen, biokompatiblen Polymeren, Lacken, Klebstoffen und Polymerblends, als Trägermaterialien für Katalysatoren und Wirkstoffe in Medizin, Biochemie und Synthese, als Reaktionskompartments zur Katalyse und Herstellung von Nanopartikeln.

Weiterhin können die erfindungsgemäß hergestellten, hochverzweigten Polyole mit einem zweiten (und gegebenenfalls weiteren) Epoxidmonomeren wie z.B. Propylenoxid, Ethylenoxid, Butylenoxid, Vinyloxiran, Allylglycidether Isopropylglycidylether, Phenylglycidylether und deren Mischungen, zu Blockcopolymeren umgesetzt werden. Bevorzugt eingesetzt werden Ethylenoxid, Propylenoxid, Butylenoxid, Vinyloxiran und deren Mischungen. Bevorzugt wird das hochverzweigte Polyol aber unter basischer Katalyse ohne zwischenzeitliche Aufarbeitung im gleichen Reaktorgefäß mit dem Epoxidmonomer/der Epoxidmonomermischung gegebenenfalls unter Einsatz eines Lösungsmittels umgesetzt. Eine erneute Deprotonierung des hochverzweigten Polyols unter Zuhilfenahme der oben beschriebenen basischen Reagenzien kann ebenfalls erfolgen. Deprotonierungsgrade liegen üblicherweise bei 0,1 % bis 90 % und vorzugsweise bei 5 % bis 20 %, bezogen auf eine OH-Gruppe. Die Reaktionstemperaturen liegen dabei zwischen -40°C und 200°C, bevorzugt zwischen 20°C und 180°C, besonders bevorzugt zwischen 60°C und 160°C. Die Reaktion kann bei Gesamtdrücken zwischen 0,001 und 20 bar durchgeführt werden. Die Aufarbeitung der Blockcopolymere erfolgt bevorzugt durch die bereits oben beschriebenen Techniken zur Aufarbeitung von Polyetherpolyolen.

Die so dargestellten Blockcopolymere besitzen Polymerisationsgrade (bezogen auf eine OH-Gruppe des eingesetzten hochverzweigten Polyols) von 1 bis 70, vorzugsweise 1 bis 10. Die Molmasse kann dem anionischen Verfahren entsprechend durch das Monomer/Initiator-Verhältnis gesteuert werden. Die Bestimmung der Molmasse kann z.B. durch Dampfdruckosmose erfolgen. Die Polydispersitäten sind kleiner 2,0 und vorzugsweise kleiner als 1,5. Sie werden über eine z.B. mit Polypropylenglykol-Standards geeichte GPC bestimmt. Die Produkte sind vorzugsweise farblose Öle, die aber auch schwach gelblich gefärbt sein können. Die Polymere besitzen OH-Zahlen (mg KOH-Äquivalente pro g Polymer) zwischen 750 und 14, vorzugsweise zwischen 400 und 30.

Die so hergestellten hochverzweigten Blockcopolymere sind vielseitige hochfunktionelle polymere Zwischenstufen. Die große Variationsbreite an Blockcopolymerzusammensetzungen eröffnen vielfältige Anwendungsmöglichkeiten, so z.B. die Verwendung als Vernetzer und Additive in Polyethanformulierungen, biokompatiblen Polymeren, Lacken, Klebstoffen und Polymerblends, als Trägermaterialien für Katalysatoren und Wirkstoffe in Medizin, Biochemie und Synthese, als Reaktionskompartments zur Katalyse und Herstellung von Nanopartikeln, wobei Reaktionskompartment als ein räumlich begrenzter Reaktionsraum im Nanometerbereich zu verstehen ist.

### Beispiele

### Beispiel 1 (Trimethylolpropan als Initiator)

1,2 g Trimethylolpropan werden in einem auf 100°C beheizten 250 mL Glasreaktor aufgeschmolzen und mit 0,7 mL Kaliummethoxid-Lösung (25%ig in Methanol) zur Reaktion gebracht und anschließend überschüssiges Methanol im Vakuum entfernt. Der Rückstand wird unter Inertgasbedingungen (Ar) in 15 mL trockenem Diglyme gelöst. Dann wird bei 140°C eine Lösung aus 34 g frischdestilliertem Glycidol in 100 mL trockenem THF mit einer Geschwindigkeit von 5 mL pro Stunde zur Reaktionsmischung dosiert, wobei THF kontinuierlich abdestilliert wird. Nach beendeter Zugabe wird die Reaktionsmischung in 150 mL Methanol gelöst und durch Filtration über einen sauren Ionentauscher (Amberlite® IR-120) neutralisiert. Das Filtrat wird in 1600 mL Aceton ausgefällt und das gewonnene Polymer bei 80°C für 12 Stunden im Vakuum getrocknet. Es werden 33 g einer farblosen, hochviskosen Flüssigkeit mit einer Molmasse von 3.700 (Polymerisationsgrad 16 pro aktivem Wasserstoff) und einer Polydispersität von 1,15 erhalten. Alle Moleküle enthalten den Initiator als Kerneinheit und besitzen 26% verzweigte Baueinheiten.

### Beispiel 2 (Polyethylenglykol 600 als Initiator)

In der Arbeitsweise von Beispiel 1 werden 6,0 g Polyethylenglykol mit einer Molmasse von 600 mit 0,25 mL Kaliummethoxidlösung (25%ig in Methanol) bei 100°C zur Reaktion gebracht, überschüssiges Methanol im Vakuum entfernt und der Rückstand in 10 mL trockenem Diglyme gelöst. Bei einer Badtemperatur von 140°C werden 14 g Glycidol in 100 mL trockenem THF mit einer Geschwindigkeit von 5 mL pro Stunde zudosiert. Das Polymer wird wie in Beispiel 1 isoliert. Es werden 19 g einer farblosen, hochviskosen Flüssigkeit mit einer Molmasse von 2.000 (Polymerisationsgrad 9,5 pro aktivem Wasserstoff) und einer Polydispersität von 1,13 gewonnen. Alle Moleküle enthalten den Initiator als Kerneinheit und 26% verzweigte Baueinheiten.

### Beispiel 3 (Stearylamin als Initiator)

2,1 g Stearylamin werden in einem auf 100°C beheizten 250 mL Glasreaktor aufgeschmolzen und mit 1,2 g Glycidol zur Reaktion gebracht. Dann werden 0,9 mL Kaliummethoxidlösung (25%ig in Methanol) zugesetzt und überschüssiges Methanol im Vakuum entfernt. Bei 140°C wird der Rückstand in 15 mL trockenem Diglyme gelöst. Mit einer Geschwindigkeit von 5 mL pro Stunde werden 55 g Glycidol in 100 mL trockenem THF zudosiert. Das Polymer wird analog der Arbeitsweise von Beispiel 1 isoliert. Es werden 54 g einer farblosen, hochviskosen Flüssigkeit mit einer Molmasse von 7.200 (Polymerisationsgrad 47 pro aktivem Wasserstoff des Amins) und einer Polydispersität von 1,23 gewonnen. Alle Moleküle enthalten den Initiator als Kerneinheit und 27% verzweigte Baueinheiten.

### Vergleichsbeispiel 4 (Durchführung ohne Lösungsmittel, analog EP-A 116 978)

Unter den Bedingungen und mit den Edukten aus Beispiel 2 wird die Polymerisation in Abwesenheit jeglicher Lösungsmittel durchgeführt und Glycidol tropfenweise der Reaktionsmischung zugegeben. Es werden 19 g einer gelblichen, hochviskosen Flüssigkeit mit einer Molmasse von 1.600 (Polymerisationsgrad 7 pro aktivem Wasserstoff) und einer Polydispersität von 1,84 gewonnen. Nur 50% aller Moleküle enthalten den Initiator als Kerneinheit.

### Beispiel 5 Herstellung Blockcopolymer

1,0 g eines hochverzweigten Polyols auf Glycidol-Basis hergestellt gemäß Verfahren in Beispiel 1 mit einer Molmasse von 4.000 (entsprechend 52 OH-Endgruppen) werden in einem auf 100°C beheizten 250 mL Glasreaktor mit 0,1 Äquivalenten Kaliumhydrid pro aktivem Wasserstoff umgesetzt. Es werden 50 mL Propylenoxid zudosiert in einer Art, dass die Innentemperatur zwischen 80°C und 95°C gehalten wird. Nach beendeter Zugabe wird die Reaktionsmischung in 150 mL Methanol gelöst und durch Filtration über einen sauren Ionentauscher (Amberlite® IR-120) neutralisiert. Das Filtrat wird vom Methanol befreit und für 12 Stunden bei 80°C im Vakuum getrocknet. Es werden 42 g einer farblosen, hochviskosen Flüssigkeit mit einer Molmasse von 12.300, einer Polydispersität von 1,3 und einer OH-Zahl von 234 mg KOH/g erhalten.

## Patentansprüche

1. Verfahren zur Herstellung von Polyolen auf Glycidolbasis mit einem Polymerisationsgrad von 1 bis 300, einer Polydispersität kleiner 1,7, einem Gehalt an verzweigten Einheiten, bezogen auf die Gesamtheit aller Monomereinheiten und bestimmt durch ¹³C-NMR-Spektroskopie, von 10 bis 33 mol%, bei dem einer wasserstoffaktiven Starterverbindung unter basischer Katalyse eine Lösung, enthaltend Glycidol in verdünnter Form zugegeben wird, wobei das zur Monomerverdünnung eingesetzte Lösungsmittel kontinuierlich abdestilliert wird.

2. Polyole, erhältlich durch Umsetzung der gemäß Anspruch 1 erhaltenen Polyole mit Epoxidmonomeren.

3. Polyole, erhältlich durch Umsetzung der gemäß Anspruch 1 erhaltenen Polyole mit Ethylenoxid, Propylenoxid, Butylenoxid, Vinyloxiran, Allylglycidylether, Isopropylglycidylether, Phenylglycidylether und deren Mischungen.

4. Verwendung der Polyole gemäß einem des Ansprüche 2 oder 3 und daraus hergestellter Derivate als Vernetzer und Additive in Polyurethanformulierungen, biokompatiblen Polymeren, Lacken, Klebstoffen und Polymerblends, in Trägermaterialien für Katalysatoren und Wirkstoffen, in Reaktionskompartments zur Katalyse und Herstellung von Nanopartikeln.

## Claims

1. Process for the preparation of polyols based on glycidol and having a degree of polymerisation of 1 to 300, a polydispersity of less than 1.7 and a content of branched units, based on all of the monomeric structural units and determined by ¹³C-NMR spectroscopy, of 10 to 33 mol%, wherein a solution containing glycidol in diluted form is added to a hydrogen-active starter compound, with basic catalysis, and the solvent used for the dilution of the monomer is continuously distilled off.

2. Polyols, obtainable by reacting the polyols obtained according to claim 1 with epoxide monomers.

3. Polyols, obtainable by reacting the polyols obtained according to claim 1 with ethylene oxide, propylene oxide, butylene oxide, vinyl oxirane, ally glycidyl ether, isopropyl glycidyl ether, phenyl glycidyl ether and mixtures thereof.

4. Use of the polyols according to one of claims 2 and 3, and of derivatives prepared from them, as crosslinking agents and additives in polyurethane formulations, in biocompatible polymers, in paints, adhesives and polymer blends, in support materials for catalysts and active ingredients, in reaction compartments for the catalysis and production of nanoparticles.

## Revendications

1. Procédé de préparation de polyols à base de glycidol avec un taux de polymérisation de 1 à 300, une polydispersion inférieure à 1,7, un taux d'unités ramifiées par rapport à la totalité de toutes les unités monomères et déterminé par spectroscopie RMN ¹³C de 10 à 33% en mole, dans lequel une solution contenant du glycidol sous forme diluée est ajoutée à un composé de départ à hydrogène actif sous catalyse basique, le solvant utilisé pour la dilution des monomères étant séparé par distillation en continu.

2. Polyol obtenu par mise en réaction des polyols obtenus selon la revendication 1 avec des monomères époxydes.

3. Polyols obtenus par mise en réaction des polyols obtenus selon la revendication 1 avec de l'éthylèneoxyde, du propylèneoxyde, du butylèneoxyde, du vinyloxiran, de l'allylglycidyléther, de l'isopropylglycidyléther, du phénylglycidyléther et leurs mélanges.

4. Mise en oeuvre des polyols selon l'une des revendications 2 ou 3 et des dérivés préparés à partir de ceux-ci comme réticulants et additifs dans des formulations de polyuréthane, des polymères biocompatibles, des peintures, des adhésifs et des mélanges de polymères, dans des matériaux de support pour les catalyseurs et principes actifs, dans les compartiments de réaction pour la catalyse et la préparation de nanoparticules.
